# EUROPEAN PATENT SPECIFICATION

(11) **EP 2 620 899 B1**
(45) Date of publication and mention of the grant of the patent: **16.10.2019**
(21) Application number: 11826421.7
(22) Date of filing: 22.09.2011
(51) Int. Cl.: G06K 19/077, G06K 19/07, G06K 7/00, G06K 7/10

(54) **SMART CHIP AND METHOD FOR SMART CHIP DATA COMMUNICATIONS**
INTELLIGENTER CHIP UND VERFAHREN FÜR DATENANWENDUNGEN MIT INTELLIGENTEN CHIPS
PUCE INTELLIGENTE ET PROCÉDÉ DE COMMUNICATION DE DONNÉES POUR PUCE INTELLIGENTE

(30) Priority: 26.09.2010 CN 201010292298
(43) Date of publication of application: 31.07.2013
(73) Proprietor: Beijing Watch Data System Co., Ltd., Beijing 100015 (CN)
(72) Inventor: SHAO, Chong, Beijing100015 (CN); YANG, Yuning, Beijing 100015 (CN); LI, Ming, Beijing 100015 (CN); JIA, Zhenbo, Beijing 100015 (CN)
(74) Representative: Global IP Europe Patentanwaltskanzlei
(86) International application number: PCT/CN2011/080050
(87) International publication number: WO 2012/037894

(56) References cited:
- CN-A- 101 079 013
- CN-A- 101 491 052
- CN-A- 101 770 593
- CN-A- 101 976 370
- CN-A- 101 996 340
- CN-Y- 2 924 645
- US-A1- 2008 320 187
- US-A1- 2009 187 709

## Description

The present application claims the priority of a Chinese Patent Application No. 201010292298.X entitled "SMART CHIP AND METHOD FOR SMART CHIP DATA COMMUNICATIONS" and filed to the State Intellectual Property Office of the People's Republic of China on September 26, 2010,.

### Field of the Invention

The present invention relates to the technical field of smart chip, and particularly, to a smart chip and a method for smart card data communications.

### Background of the Invention

Currently in the smart card industry, one smart card usually works by using one smart chip corresponding to a communication interface on the hardware, such as the widely used communication interface 7816, through which the smart card exchanges data with the terminal or card reader, i.e., the smart card performs a data exchange with the outside only through this one communication interface 7816.

For a smart card that works by simultaneously using a plurality of smart chips, each smart chip is corresponding to a communication interface, and thus the smart card includes two or more communication interfaces. For example, one communication interface takes charge of communicating with other smart cards, and another communication interface takes charge of communicating with the terminal or card reader. As a result, the existing data communication mode of single-chip and single-communication interface cannot meet the work demand of the smart card, and the smart card has to coordinate the works between multiple communication interfaces, e.g., coordinate the processing of simultaneously transmitting and receiving data by multiple interfaces, or coordinate the communication timings of data transmissions and receptions by multiple interfaces. Thus, when performing a data communication, the smart card has to call a processing program corresponding to smart chip for each type of the data, thereby increasing processing flows of the smart card data communication, and wasting resources of the smart chips and processing time of the data communication. It is clear that the current smart chip only has one communication interface, which leads to a poor communication extensibility of the smart chip.

US 2009/187709 A1 discloses a smart chip for data communication, comprising: a processing unit; and a first communication interface connected to the processing unit, configured to receive an Application Protocol Data Unit (APDU) operation command transmitted by a terminal and forward the APDU operation command to the processing unit, and receive a first processing result or a second processing result transmitted by the processing unit and return the first processing result or the second processing to the terminal.

### Summary of the Invention

The embodiments of the present invention provide a smart chip according to claims 1 to 5 and a method for smart chip data communications according to claims 6 to 9 to improve resource utilization rate of the smart chip.

The embodiments of the present invention provide a smart chip, comprising:
a first communication interface connected to a processing unit, configured to receive an Application Protocol Data Unit (APDU) operation command transmitted by a terminal and forward the APDU operation command to the processing unit, and receive a first processing result or a second processing result transmitted by the processing unit and return the first processing result or the second processing to the terminal;
at least one second communication interface connected to the processing unit, configured to receive the APDU operation command transmitted by the processing unit and forward the APDU operation command to a smart card connected to the second communication interface, and receive the second processing result returned by the smart card and forward the second processing result to the processing unit; and
the processing unit, configured to process correspondingly upon determining the APDU operation command is processing command for the smart chip, and transmit the first processing result to the first communication interface, otherwise transmit the APDU operation command to the second communication interface, receive the second processing result forwarded by the second communication interface, and transmit the second processing result to the first communication interface and
the processing unit is further configured to initialize, after being powered on, chip hardware, the first communication interface and the second communication interface, receive reset information of the smart card connected to each second communication interface returned by the second communication interface upon determining that the smart chip is connected to the smart card, and transmit all the received reset information to the first communication interface, otherwise transmit the reset information of the smart chip to the first communication interface.

The embodiments of the present invention provide a method for smart chip data communications, comprising:
receiving by a smart chip, via a first communication interface, an Application Protocol Data Unit (APDU) operation command transmitted by a terminal;
processing correspondingly upon determining the APDU operation command is a processing command for the smart chip, and returning a first processing result to the terminal via the first communication interface; otherwise
transmitting via the second communication interface, the APDU operation command to a smart card connected to the second communication interface, and returning via the first communication interface, a second processing result returned via the second communication interface by the smart card to the terminal,
wherein before receiving by the smart chip, via the first communication interface, the APDU operation command transmitted by the terminal, the method further comprises:
   initializing by the smart chip which has been powered on, chip hardware, the first communication interface and the second communication interface;
   judging by the smart chip whether it is connected to the smart card;
   if yes, obtaining via each second communication interface reset information of the smart card connected to the second communication interface, and transmitting via the first communication interface all the received reset information to the terminal; otherwise
   transmitting via the first communication interface the reset information of the smart chip to the terminal.

In the embodiments of the present invention, the smart chip includes at least two communication interfaces. The smart chip receives via a first communication interface an APDU operation command transmitted by a terminal, processes correspondingly upon determining the APDU operation command is a processing command for the smart chip, and returns via the first communication interface a first processing result to the terminal, otherwise, transmits via a second communication interface the APDU operation command to a smart card connected to the second communication interface, and returns via the first communication interface, a second processing result returned via the second communication interface by the smart card to the terminal. Thus, one smart chip can communicate data with the terminal and other smart cards, thereby improving resource utilization rate of the smart chip.

### Brief Description of the Drawings

Fig. 1 is a flowchart of a smart chip data communication in an embodiment of the present invention;
Fig. 2 is a flowchart of a smart chip initialization in an embodiment of the present invention;
Fig. 3 is a flowchart of a smart chip Protocol Parameter Selection (PPS) in an embodiment of the present invention;
Fig. 4 is a working flowchart after a SimPartner is inserted into a cell phone in an embodiment of the present invention;
Fig. 5 is a structure diagram of a smart chip in an embodiment of the present invention; and
Fig. 6 is a structure diagram of a smart chip in another embodiment of the present invention.

### Detailed Description of the Preferred Embodiments

The embodiment of the present invention provides a smart chip having two or more communication interfaces, wherein the smart chip communicates data with a terminal through a first communication interface, and communicates data with a smart card through a second communication interface.

Herein the smart chip includes one, two or more second communication interfaces, i.e., the smart chip may be connected to one, two or more other smart cards. In which, the communication interface include communication interface 7816, USB communication interface, SWP communication interface, USB-CCID communication interface or SIP communication interface. Of course, in the embodiment of the present invention, the smart chip may be individually constructed as a smart card or just a part thereof. The connection between the second communication interface of the smart chip and the smart card includes contact connection and non-contact connection.

In the embodiment of the present invention, the smart card may include one, two or more smart chips. That is, the smart card may specifically be a Universal Integrated Circuit Card (UICC) or other types of smart cards, such as power purchase card, bank terminal card or meal card. The UICC may include several types of logic modules, such as Subscriber Identity Module (SIM), Universal Subscriber Identity Module (USIM), IP Multi Media Service Identity Module (ISIM), or other non-telecom application modules such as electronic signature verification and electronic wallet. The logic modules in the UICC may be existed individually or simultaneously.

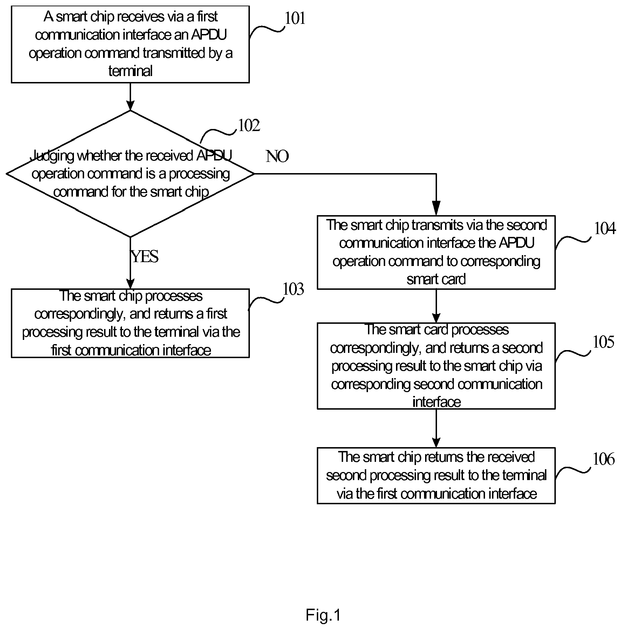

Referring to Fig. 1, When the smart card is connected to the terminal through the first communication interface and connected to corresponding smart card through the second communication interface, wherein there may be one, two or more second communication interfaces, the process of the smart chip data communication includes:
Step 101: the smart chip receives, via the first communication interface, an Application Protocol Data Unit (APDU) operation command transmitted by a terminal.

According to the standard protocol of the smart card communication, the smart chip receives the APDU operation command via the first communication interface.

Step 102: judging whether the received APDU operation command is a processing command for the smart chip; if yes, performing step 103, otherwise performing step 104.

The smart chip stores all processible APDU operation commands, and immediately scans the stored processible APDU operation commands when receiving an APDU operation command. In the case that the received APDU operation command is found in the stored processible APDU operation commands, step 103 is performed, otherwise step 104 is performed.

Step 103: the smart chip processes correspondingly, and returns a first processing result to the terminal via the first communication interface. Then the flow is ended.

The received APDU operation command is a processing command for the smart chip. Thus the first processing result is obtained by processing correspondingly, and then returned to the terminal to finish the data communication process.

Herein, the first processing result is generally represented in the form of writing related status words into an APDU response command. Next, the APDU response command, into which related status words are written, is returned to the terminal to finish the data communication process.

Step 104: the smart chip transmits, via the second communication interface, the APDU operation command to a smart card connected to the second communication interface.

The received APDU operation command is not a processing command for the smart chip. In that case, if the smart chip is connected to the smart card via just one second communication interface, the APDU operation command is transmitted to the smart card. If the smart chip is connected to corresponding smart cards via a plurality of second communication interfaces, respectively, a judgment is made according to a channel number in the APDU operation command, so as to determine corresponding second communication interface, and then the APDU operation command is transmitted via the determined second communication interface to the smart card connected to the second communication interface.

Step 105: the smart card having received the APDU operation command processes correspondingly, and returns a second processing result to the smart chip via corresponding second communication interface.

After receiving APDU operation command, the smart card processes correspondingly to obtain the second processing result, and returns the second processing result via corresponding second communication interface to the smart chip.

It can be seen that in the embodiment of the present invention, the first processing result is obtained after the smart chip executes the APDU operation command, while the second processing result is obtained after the smart card performs the APDU operation command.

Step 106: the smart chip returns the received second processing result to the terminal via the first communication interface. Then the flow is ended.

When the first communication interface is a communication interface 7816, the second processing result may be returned via the communication interface 7816 to the terminal according to the rules of ISO7816-3. Then the flow is ended.

When the first communication interface is a USB communication interface, the second processing result may be returned via the USB communication interface to the terminal according to USB communication rules. Then the flow is ended.

The communication processes of other communication interfaces are similar to the above, and herein are omitted.

In the above embodiment, before step 104, the smart chip shall further judge whether data transmitted from the terminal is received via the first communication interface. In the case that the data transmitted from the terminal is received via the first communication interface, the smart chip transmits the APDU operation command as well as the received data to corresponding smart card via the second communication interface in step 104. Thus, the smart card processes correspondingly according to the APDU operation command and the data in step 105, so as to obtain the second processing result. Herein the second processing result includes one or more kinds of status words in the APDU response command, INS command, and result data.

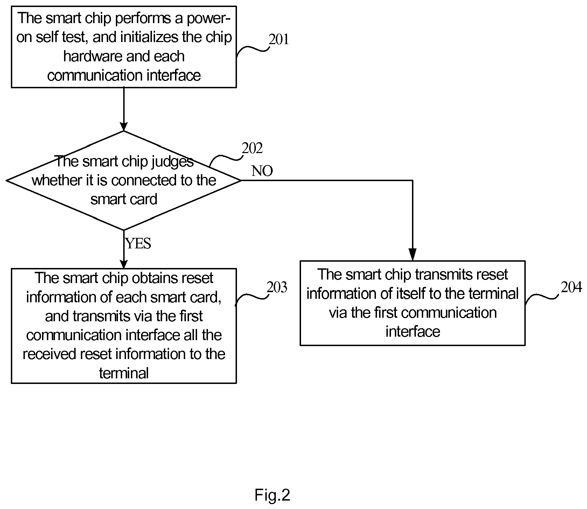

During the process of the smart chip data communication, the smart chip has been in a normal working state, and it can be determined that the smart chip is connected to not only the terminal, but also at least one smart card. However, when the smart chip is initially powered on, there is a process of determining the working state, i.e., before the smart chip performs a data communication, there is an initialization process as illustrated in Fig. 2, comprising:
Step 201: the smart chip performs a power-on self test (POST), and initializes the chip hardware and each communication interface.

Herein, the chip hardware, the first communication interface and the second communication interface are initialized.

Step 202: the smart chip judges whether it is connected to the smart card; if yes, performing step 203, otherwise performing step 204.

Herein, there are several methods to determine whether the smart chip is connected to the smart card, wherein the first method includes:
The smart chip reads the setting information in the storage unit, and determines that the smart chip is connected to the smart card when the setting information contains a mark of connection to the smart card, otherwise determines that no smart card is connected to the smart chip.

Generally, a setting information can be read by a smart chip at a specific address of an EEPROM or of a FLASH in the smart chip, and the setting information contains a mark indicating whether there is a smart card connected to the smart chip.

The second method includes:
The smart chip transmits a reset signal to each second communication interface and performs a monitoring. When reset information is monitored on one of the second communication interfaces within the preset time, it is determined that the smart chip is connected to corresponding smart card via the second communication interface. When no reset information is monitored on any of the second communication interfaces within the preset time, it is determined that there is no smart card connected to the smart chip. That is, the smart chip transmits a reset signal to each second communication interface, and determines that the smart chip is connected to a smart card when reset information of the smart card is received within the preset time.

Step 203: the smart chip obtains, via each second communication interface, reset information of the smart card connected to the second communication interface, and transmits via the first communication interface all the received reset information to the terminal.

The smart chip has been determined as being connected to at least one smart card. In that case, reset information of corresponding smart card is obtained via each second communication interface. When the smart card determines that the smart chip is connected to at least one smart card through the first method in step 202, the smart card orderly transmits reset signal(s) to corresponding smart card via each second communication interface, and receives reset information returned by each smart card, thereby obtaining the reset information of each smart card.

When the smart card determines that the smart chip is connected to at least one smart card through the second method in step 202, the smart card directly obtains the monitored reset information of each of the smart cards.

In the embodiment of the present invention, after all the reset information is received, the reset information of these smart cards is transmitted to the terminal at one time via the first communication interface.

Of course, after the smart chip transmits the reset information of the smart cards to the terminal, the flags of related variables shall be set, and then the initialization process of the smart chip is ended.

Step 204: the smart chip transmits reset information of itself to the terminal via the first communication interface.

The smart chip has been determined as being not connected to the smart card. Thus, the reset information of the smart chip is transmitted via the first communication interface to the terminal, and the flags of related variables are set. Thus the initialization process of the smart chip is ended.

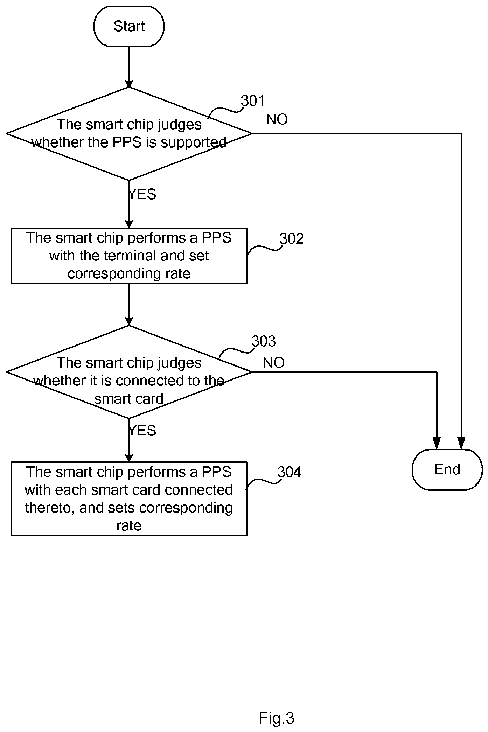

Through the above initialization process of the smart chip, the working state of the smart chip has been determined, and whether the smart chip is connected to a smart card is also determined. However, if the smart chip supports the rate Protocol Parameter Selection (PPS), a PPS shall be carried out with the terminal and the smart card, respectively. That is, after the initialization process of the smart chip and before the data communication, a PPS shall be carried out. Referring to Fig. 3, the PPS process includes:
Step 301: the smart chip judges whether the PPS is supported; if yes, performs step 302, otherwise the PPS process is ended.

Generally after the smart chip is initialized, if one specific data such as 0XFF is received via the first communication interface, it means that the smart chip can perform a PPS with the terminal, i.e., carry out step 302; otherwise when the received data is the APDU operation command, the PPS is not supported, and the PPS process is ended.

Step 302: the smart chip performs a PPS with the terminal and set corresponding rate.

Step 303: the smart chip judges whether it is connected to the smart card; if yes, performs step 304, otherwise the PPS process is ended.

The process of judging whether the smart chip is connected to the smart card is consistent with step 202, and herein is omitted.

Step 304: the smart chip performs a PPS with each smart card connected thereto, and sets corresponding rate, then the PPS process is ended.

Through the above PPS process, the communication rates between the terminal, the smart chip and the smart card are set the same as each other. Of course, in the embodiment of the present invention, the PPS process may be not performed, and data communications can be directly carried out after the initialization.

The embodiment of the present invention is further detailedly described as follows with reference to the drawings.

In this embodiment, the smart chip is a SimPartner, the terminal is a cell phone, and the smart card is a UICC. The SimPartner is a special card composed of upper and lower two rows of chip contacts, wherein contacts of the upper row are connected to the cell phone and responsible for the signal transmission and the data communication between the SIMPARTNER and the cell phone, while contacts of the lower row are connected to contacts of the UICC and responsible for the signal transmission and the data communication between the SIMPARTNER and the UICC.

Usually in actual usage, the unused blank side of the UICC is punched, and then the SIMPARTNER is linked with the holes of the card. Thus, the composite card can be placed into the cell phone for usage resulting in that a very small thickness is added. Or an ordinary double faced adhesive tape may be employed to bond the SIMPARTNER with the UICC.

The SIMPARTNER mainly takes charge of ensuring the accuracy and reliability of the signal transfer and the data transmission between the cell phone and the UICC, intercepting special instructions or data for a processing, and then transmitting the special instructions or data to the cell phone or the UICC.

In this embodiment, the SIMPARTNER hardware carrier uses the chip Z8D168, which is an enhanced Micro Controller Unit (MCU) 8051. One outstanding characteristic of the chip Z8D168 is that it supports the communication between two ports 7816. The master port 7816 is an SCD port, and the slave port 7816 is an SCC port. The SCD port is connected to an interface of the cell phone, and the SCC port is connected to an interface of the UICC. The data transmissions and receptions at the two ports are controlled by the chip Z8D168.

Of course, in the embodiment of the present invention, the SIMPARTNER is not just limited to the chip Z8D168, and many chips having the support of double communication interface 7816 are also applicable. Herein the chip Z8D168 is mainly employed as the hardware carrier to describe the working flow.

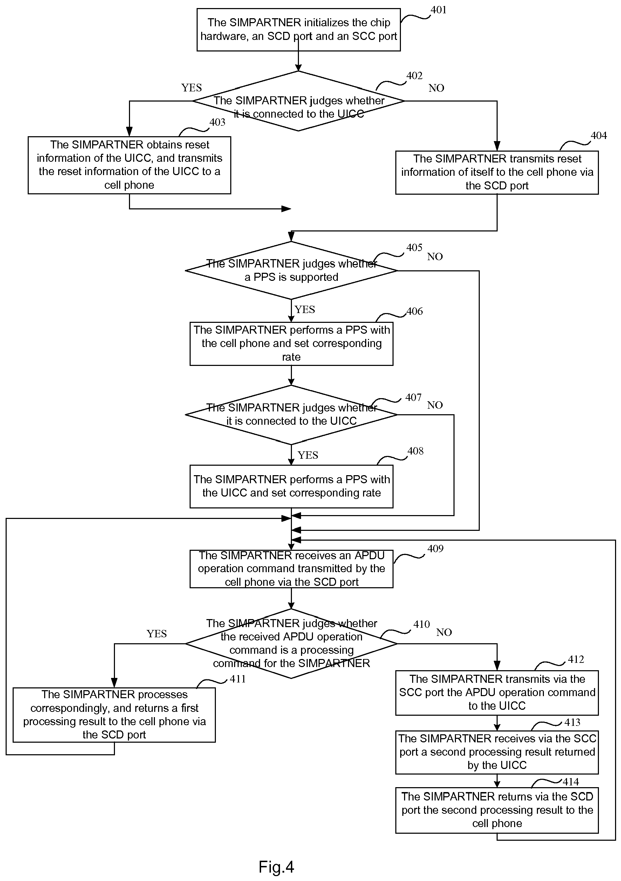

Referring to Fig. 4, the SIMPARTNER is inserted into the cell phone, the SCD port is connected to the interface of the cell phone, and the SCC port is connected to the interface of the UICC. That is to say that the SCD port is the first communication interface, and the SCC port is the second communication interface. The detailed working flow includes:
Step 401: the SIMPARTNER is powered on to initialize the chip hardware, the SCD port and the SCC port.
Step 402: the SIMPARTNER judges whether it is connected to the UICC; if yes, performing step 403, otherwise performing step 404.

Herein, it is judged whether the SCC port of the SIMPARTNER is connected to the interface of the UICC.

Step 403: the SIMPARTNER obtains reset information of the UICC via the SCC port, and transmits the reset information of the UICC to the cell phone via the SCD port. Then the flow turns to step 405.

Of course, the SIMPARTNER shall set the flags of related variables in this step.

Step 404: the SIMPARTNER transmits reset information of itself to the cell phone via the SCD port. Then the flow turns to step 405.

In this step, the SIMPARTNER shall also set the flags of related variables

Step 405: the SIMPARTNER judges whether a PPS is supported; if yes, performing step 406, otherwise directly performing step 409.

Step 406: the SIMPARTNER performs a PPS with the cell phone and set corresponding rate.

Step 407: the SIMPARTNER judges whether it is connected to the UICC; if yes, performing step 408, otherwise performing step 409.

Step 408: the SIMPARTNER performs a PPS with the UICC and set corresponding rate, and turns to step 409.

Step 409: the SIMPARTNER receives an APDU operation command transmitted by the cell phone via the SCD port.

Step 410: the SIMPARTNER judges whether the received APDU operation command is a processing command for the SIMPARTNER; if yes, performing step 411, otherwise performing step 412.

Step 411: the SIMPARTNER processes correspondingly, and returns a first processing result to the cell phone via the SCD port. Then the flow returns to step 409 to continue to perform the process of a next data communication.

Step 412: the SIMPARTNER transmits via the SCC port the APDU operation command to the UICC.

Step 413: the SIMPARTNER receives via the SCC port a second processing result returned by the UICC.

That is, after receiving the APDU operation command, the UICC processes correspondingly to obtain a second processing result, and returns the second processing result to the SIMPARTNER via the SCC port.

Step 414: the SIMPARTNER returns via the SCD port the second processing result to the cell phone. Then the flow returns to step 409 to continue to perform the process of a next data communication.

The above process describes the working flow after the SIMPARTNER is inserted into the cell phone. Of course, before the SIMPARTNER transmits the APDU operation command to the UICC via the SCC port, in the case that the data transmitted from the cell phone is also received via the SCD port, the SIMPARTNER transmits the APDU operation command together with the data to the UICC via the SCC port. Thus, the UICC processes correspondingly according to the APDU operation command and the data to obtain the second processing result.

The above embodiment is described by taking the SIMPARTNER which has two communication interfaces as an example, but the embodiments of the present invention are not limited thereto. When there are two or more communication interfaces, the SIMPARTNER judges that two or more UICCs are connected to it during the initialization, obtains reset information of each UICC successively, and transmits the reset information of all the UICCs to the cell phone at one time. During performing the PPS, the SIMPARTNER performs a PPS with each UICC successively as well. Thus, during the data communication, when receiving an APDU operation command and judging that it is not a processing command for the SIMPARTNER, the SIMPARTNER may judge according to the channel number in the APDU operation command, transmit the APDU operation command to corresponding UICC for an execution, and obtain corresponding second processing result. The detailed process is omitted herein.

In the above embodiment, the SIMPARTNER perform a PPS after being initialized. Of course, the PPS may be not carried out in the embodiment of the present invention, i.e., step 409 is directly performed after step 403 or 404.

The above embodiment is exemplarily described by taking the smart chip as the SIMPARTNER, the terminal as the cell phone, the smart card as the UICC, and the SIMPARTNER carrier as the chip Z8D168, but the embodiments of the present invention are not limited thereto. Other smart chips, terminals or smart cards may also adopt the above working process.

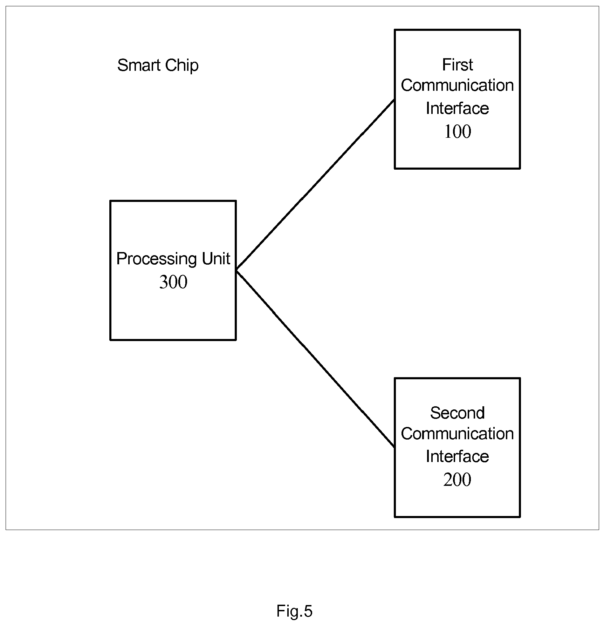

According to the process of the smart chip data communication, the concrete structure of the corresponding smart chip is illustrated in Fig. 5, including a first communication interface 100, at least one second communication interface 200 and a processing unit 300, in which:
The first communication interface 100 is connected to the processing unit 300, configured to receive an APDU operation command transmitted by a terminal and forward the APDU operation command to the processing unit 300, and receive a first processing result or a second processing result transmitted by the processing unit 300 and return the first processing result or the second processing to the terminal.

The second communication interface 200 is connected to the processing unit 300, configured to receive the APDU operation command transmitted by the processing unit 300 and forward the APDU operation command to a smart card connected to the second communication interface, and receive the second processing result returned by the smart card and forward the second processing result to the processing unit 300.

The processing unit is configured to process correspondingly upon determining the APDU operation command is a processing command for the smart chip, and transmit the first processing result to the first communication interface 100, otherwise transmit the APDU operation command to the second communication interface, receive the second processing result forwarded by the second communication interface, and transmit the second processing result to the first communication interface 100.

The smart chip shall be initialized after being powered on, thus,

The processing unit 300 is further configured to initialize, after being powered on, chip hardware, the first communication interface 100 and the second communication interface 200, receive reset information of a smart card connected to each second communication interface 200 returned by the second communication interface 200 upon determining that the smart chip is connected to the smart card, and transmit all the received reset information to the first communication interface 100, otherwise transmit the reset information of the smart chip to the first communication interface 100.

The second communication interface 200 is further configured to obtain the reset information of the smart card connected to the second communication interface 200, and return the reset information to the processing unit.

The first communication interface 100 is further configured to transmit the received reset information of all the smart cards to the terminal, or transmit the received reset information of the smart chip to the terminal.

The processing unit 300 is further configured to read setting information in a storage unit, and determine that the smart chip is connected to the smart card when the setting information contains a mark indicating there is a connection to the smart card; or transmit a reset signal to each second communication interface, and determine that the smart chip is connected to the smart card when the reset information of the smart card returned by the second communication interface is received within a preset time.

The second communication interface 200 is further configured to forward the reset signal transmitted by the processing unit to the smart card connected to the second communication interface, and receive reset information returned by the smart card.

After the initialization, if the smart chip supports the PPS, it can perform a PPS. That is, the processing unit 300 is further configured to, when the smart chip supports the rate PPS, perform a rate PPS with the terminal, and perform a rate PPS with each smart card when the smart chip is connected to the smart card.

When the smart chip performs a data communication, the first communication interface 100 is further configured to receive the data transmitted by the terminal and forward the data to the processing unit. The processing unit 300 is further configured to transmit the APDU operation command and the data to the second communication interface. The second communication interface 200 is further configured to transmit the APDU operation command and the data to the smart card connected to the second communication interface.

In the embodiment of the present invention, the processing unit 300 may be a MCU, a CPU, an FPGA or other smart processor.

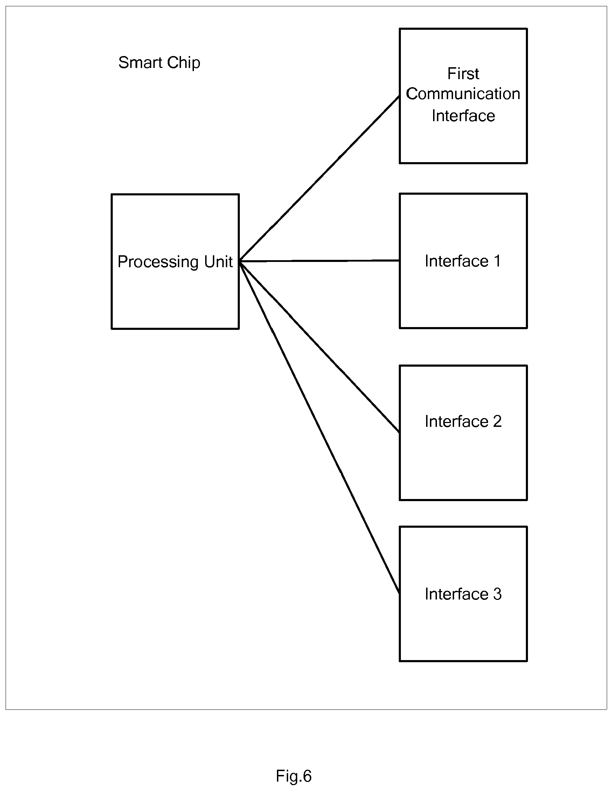

In the embodiment of the present invention, the smart chip may include one, two or more second communication interfaces, each of which is connected to the processing unit in the smart chip. Referring to Fig. 6, the smart chip includes not only the processing unit, but also three second communication interfaces, i.e., interface 1, interface 2 and interface 3, respectively. In the case that interface 1 is connected to smart card 1, interface 2 is connected to smart card 2, while interface 3 is idle, the smart chip communicates with smart card 1 via interface 1, and communicates with smart card 2 via interface 2.

Therefore, when receiving via the first communication interface an APDU operation command transmitted from the terminal and determining that the APDU operation command is not a processing command for the smart chip, the processing unit of the smart chip judges according to the channel number in the APDU operation command, so as to determine corresponding second communication interface, and then transmits via the determined second communication interface the APDU operation command to a smart card connected to the second communication interface. The smart card processes correspondingly, and returns a second processing result to the processing unit via the second communication interface. Finally, the processing unit returns the second processing result to the terminal via the first communication interface.

For example, according to the channel number in the APDU operation command, the processing unit determines that the corresponding second communication interface is interface 2, and transmits the APDU operation command to smart card 2 via interface 2. The smart card 2 processes correspondingly, and returns a second processing result to the processing unit via interface 2. The processing unit returns the second processing result to the terminal via the first communication interface.

During the initialization process of the smart chip in this embodiment, the processing unit determines that interface 1 is connected to smart card 1, interface 2 is connected to smart card 2, while interface 3 is idle; after that, the processing unit obtains reset information of smart card 1 via interface 1 and reset information of smart card 2 via interface 2 successively; and transmits the obtained reset information of smart card 1 together with reset information of smart card 2 to the terminal via the first communication interface.

Similarly, during the PPS process in this embodiment, the processing unit performs not only a PPS with the terminal via the first communication interface, but also a PPS with smart card 1 via interface 1 and a PPS with smart card 2 via interface 2.

In the embodiments of the present invention, the smart chip includes at least two communication interfaces. The smart chip receives via a first communication interface an APDU operation command transmitted by a terminal, processes correspondingly upon determining the APDU operation command is a processing command for the smart chip, and returns via the first communication interface a first processing result to the terminal, otherwise, transmits via a second communication interface the APDU operation command to a smart card connected to the second communication interface, and returns via the first communication interface, a second processing result returned via the second communication interface by the smart card to the terminal. Thus, one smart chip can communicate data with the terminal and other smart cards, thereby improving resource utilization rate of the smart chip. In addition, the smart chip does not need to perform a PPS with other smart chip(s), which saves the processing time of the data communication and increasing the efficiency of the data communication. Since the smart chip includes two or more communication interfaces, the communication extensibility is greatly improved. Meanwhile, some functions may be extended on the smart chip by executing the functions previously not available on the smart chip. For example, the function of third party payment of the bank may be placed onto the smart chip to realize the three-party authentication.

Obviously, a person skilled in the art can make various changes and modifications to the present invention without deviating from the scope of the present invention. Thus, provided that those changes and modifications to the present invention fall within the scope of the accompanied claims the present invention intends to cover those changes and modifications.

## Claims

1. A smart chip for data communication, comprising:
a processing unit (300); and
a first communication interface (100) connected to the processing unit (300), configured to receive an Application Protocol Data Unit (APDU) operation command transmitted by a terminal and forward the APDU operation command to the processing unit (300), and receive a first processing result or a second processing result transmitted by the processing unit (300) and return the first processing result or the second processing to the terminal,
**characterized in that**:
the smart chip further comprises
at least one second communication interface (200) connected to the processing unit (300), configured to receive the APDU operation command transmitted by the processing unit (300) and forward the APDU operation command to a smart card connected to the second communication interface (200), and receive the second processing result returned by the smart card and forward the second processing result to the processing unit (300);
the processing unit (300) is configured to process correspondingly upon determining the APDU operation command is a processing command for the smart chip, and then transmit the first processing result to the first communication interface (100), otherwise transmit the APDU operation command to the second communication interface (200), receive the second processing result forwarded by the second communication interface (200), and transmit the second processing result to the first communication interface (100); and
the processing unit (300) is further configured to initialize, after being powered on, chip hardware, the first communication interface (100) and the second communication interface (200), receive reset information of the smart card connected to each second communication interface (200) returned by the second communication interface (200) upon determining that the smart chip is connected to the smart card, and transmit all the received reset information to the first communication interface (100), otherwise transmit the reset information of the smart chip to the first communication interface (100).

2. The smart chip according to claim 1, wherein,
the second communication interface (200) is further configured to obtain the reset information of the smart card connected to the second communication interface (200), and return the reset information to the processing unit (300); and
the first communication interface (100) is further configured to transmit the received reset information of all the smart cards to the terminal, or transmit the received reset information of the smart chip to the terminal.

3. The smart chip according to claim 2, wherein,
the processing unit (300) is further configured to read setting information in a storage unit, and determine that the smart chip is connected to the smart card when the setting information contains a mark indicating there is a connection to the smart card; or transmit a reset signal to each second communication interface (200), and determine that the smart chip is connected to the smart card when the reset information of the smart card returned by the second communication interface (200) is received within a preset time; and
the second communication interface (200) is further configured to forward the reset signal transmitted by the processing unit (300) to the smart card connected to the second communication interface (200), and receive reset information returned by the smart card.

4. The smart chip according to claim 1, wherein,
the first communication interface (100) is further configured to receive data transmitted by the terminal and forward the data to the processing unit (300);
the processing unit (300) is further configured to transmit the APDU operation command and the data to the second communication interface (200); and
the second communication interface (200) is further configured to transmit the APDU operation command and the data to the smart card connected to the second communication interface (200).

5. The smart chip according to any of claims 1 to 4, wherein,
the processing unit (300) is further configured to, when the smart chip supports the rate PPS, perform a rate Protocol Parameter Selection (PPS) with the terminal, and performs a rate PPS with each smart card if the smart chip is connected to the smart card(s).

6. A method for smart chip data communications, comprising:
receiving (101) by a smart chip, via a first communication interface (100), an Application Protocol Data Unit (APDU) operation command transmitted by a terminal,
**characterized by**:
processing (103) correspondingly upon determining (102) the APDU operation command is a processing command for the smart chip, and returning (103) a first processing result to the terminal via the first communication interface (100); otherwise
transmitting (104) via a second communication interface (200), the APDU operation command to a smart card connected to the second communication interface (200), and returning (106) via the first communication interface (100), a second processing result returned via the second communication interface (200) by the smart card to the terminal,
wherein before receiving by the smart chip, via the first communication interface, the APDU operation command transmitted by the terminal, the method further comprises:
initializing (201) by the smart chip which has been powered on, chip hardware, the first communication interface (100) and the second communication interface (200);
judging (202) by the smart chip whether it is connected to the smart card;
if yes, obtaining (203) via each second communication interface (200) reset information of the smart card connected to the second communication interface (200), and transmitting (203) via the first communication interface (100) all the received reset information to the terminal; otherwise
transmitting (204) via the first communication interface (100) the reset information of the smart chip to the terminal.

7. The method according to claim 6, wherein judging (202) by the smart chip whether it is connected to a smart card comprising:
reading by the smart chip, setting information in a storage unit, and determining that the smart chip is connected to the smart card when the setting information contains a mark indicating there is a connection to the smart card; or
transmitting by the smart chip, a reset signal to each second communication interface (200), and determining that the smart chip is connected to the smart card when the reset information of the smart card is received within a preset time.

8. The method according to claim 6, wherein before transmitting (104) via the second communication interface (200), the APDU operation command to corresponding smart card, the method further comprising:
receiving via the first communication interface (100) data transmitted by the terminal;
transmitting via the second communication interface (200) the APDU operation command to corresponding smart card comprising:
transmitting via the second communication interface (200) the APDU operation command and the data to corresponding smart card.

9. The method according to any of claims 6 to 8, wherein in the case that the smart chip supports rate PPS, before receiving (101) by the smart chip via the first communication interface (100) the APDU operation command transmitted by the terminal, the method further comprising:
performing (302) a rate PPS with the terminal by the smart chip; and
performing (304) a rate PPS with each smart card by the smart chip when the smart chip is connected to the smart card(s).

## Patentansprüche

1. Smart-Chip zur Datenkommunikation, mit:
einer Verarbeitungseinheit (300); und
einer ersten Kommunikationsschnittstelle (100), die mit der Verarbeitungseinheit (300) verbunden und konfiguriert ist, einen Anwendungsprotokoll-Dateneinheit- (APDU) Betriebsbefehl zu empfangen, der durch ein Endgerät gesendet wird, und den APDU-Betriebsbefehl an die Verarbeitungseinheit (300) weiterzuleiten, und ein erstes Verarbeitungsergebnis oder ein zweites Verarbeitungsergebnis zu empfangen, das durch die Verarbeitungseinheit (300) gesendet wird, und das erste Verarbeitungsergebnis oder das zweite Verarbeitungsergebnis zum Endgerät zurückzuschicken,
**dadurch gekennzeichnet, dass**:
der Smart-Chip ferner aufweist:
mindestens eine zweite Kommunikationsschnittstelle (200), die mit der Verarbeitungseinheit (300) verbunden ist, die konfiguriert ist, den durch die Verarbeitungseinheit (300) gesendeten APDU-Betriebsbefehl zu empfangen und den APDU-Betriebsbefehl zu einer Smartcard weiterzuleiten, die mit der zweiten Kommunikationsschnittstelle (200) verbunden ist, und das durch die Smartcard zurückgeschickte zweite Verarbeitungsergebnis zu empfangen und das zweite Verarbeitungsergebnis zur Verarbeitungseinheit (300) weiterzuleiten;
die Verarbeitungseinheit (300) konfiguriert ist, bei der Feststellung, dass der APDU-Betriebsbefehl ein Verarbeitungsbefehl für den Smart-Chip ist, entsprechend zu verarbeiten, und dann das erste Verarbeitungsergebnis zur ersten Kommunikationsschnittstelle (100) zu senden,
andernfalls den APDU-Betriebsbefehl zur zweiten Kommunikationsschnittstelle (200) zu senden, das durch die zweite Kommunikationsschnittstelle (200) weitergeleitete zweite Verarbeitungsergebnis zu empfangen und das zweite Verarbeitungsergebnis zur ersten Kommunikationsschnittstelle (100) zu senden; und
die Verarbeitungseinheit (300) ferner konfiguriert ist, nachdem sie eingeschaltet worden ist, die Chiphardware, die erste Kommunikationsschnittstelle (100) und die zweite Kommunikationsschnittstelle (200) zu initialisieren,
Rücksetzinformationen der Smartcard zu empfangen, die mit jeder zweiten Kommunikationsschnittstelle (200) verbunden ist, die durch die zweite Kommunikationsschnittstelle (200) bei der Feststellung zurückgeschickt werden, dass der Smart-Chip mit der Smartcard verbunden ist, und alle empfangenen Rücksetzinformationen an die erste Kommunikationsschnittstelle (100) zu senden, andernfalls die Rücksetzinformationen des Smart-Chips an die erste Kommunikationsschnittstelle (100) zu senden.

2. Smart-Chip nach Anspruch 1, wobei
die zweite Kommunikationsschnittstelle (200) ferner konfiguriert ist, die Rücksetzinformationen der mit der zweiten Kommunikationsschnittstelle (200) verbundenen Smartcard zu erhalten, und die Rücksetzinformationen an die Verarbeitungseinheit (300) zurückzuschicken; und
die erste Kommunikationsschnittstelle (100) ferner konfiguriert ist, die empfangenen Rücksetzinformationen aller Smartcards an das Endgerät zu senden, oder die empfangenen Rücksetzinformationen des Smart-Chips an das Endgerät zu senden.

3. Smart-Chip nach Anspruch 2, wobei,
die Verarbeitungseinheit (300) ferner konfiguriert ist, Einstellungsinformationen in einer Speichereinheit zu lesen und festzustellen, dass der Smart-Chip mit der Smartcard verbunden ist, wenn die Einstellungsinformationen eine Markierung enthalten, die anzeigt, dass es eine Verbindung mit der Smartcard gibt; oder ein Rücksetzsignal an jede zweite Kommunikationsschnittstelle (200) zu senden, und festzustellen, dass der Smart-Chip mit der Smartcard verbunden ist, wenn die durch die zweite Kommunikationsschnittstelle (200) zurückgeschickten Rücksetzinformationen der Smartcard innerhalb einer voreingestellten Zeit empfangen werden; und
die zweite Kommunikationsschnittstelle (200) ferner konfiguriert ist, das durch die Verarbeitungseinheit (300) gesendete Rücksetzsignal zu der mit der zweiten Kommunikationsschnittstelle (200) verbundenen Smartcard weiterzuleiten, und durch die Smartcard zurückgeschickte Rücksetzinformationen zu empfangen.

4. Smart-Chip nach Anspruch 1, wobei
die erste Kommunikationsschnittstelle (100) ferner konfiguriert ist, durch das Endgerät gesendete Daten zu empfangen und die Daten zur Verarbeitungseinheit (300) weiterzuleiten;
die Verarbeitungseinheit (300) ferner konfiguriert ist, den APDU-Betriebsbefehl und die Daten an die zweite Kommunikationsschnittstelle (200) zu senden; und
die zweite Kommunikationsschnittstelle (200) ferner konfiguriert ist, den APDU-Betriebsbefehl und die Daten an die mit der zweiten Kommunikationsschnittstelle (200) verbundene Smartcard zu senden.

5. Smart-Chip nach einem der Ansprüche 1 bis 4, wobei die Verarbeitungseinheit (300) ferner konfiguriert ist, wenn der Smart-Chip die Raten-PPS unterstützt, eine Raten-Protokollparameterauswahl (PPS) mit dem Endgerät durchzuführen, und eine Raten-PPS mit jeder Smartcard durchführt, wenn der Smart-Chip mit der (den) Smartcard(s) verbunden ist.

6. Verfahren zur Smart-Chip-Datenkommunikation, das aufweist:
Empfangen (101) durch einen Smart-Chip, über eine erste Kommunikationsschnittstelle (100), eines Anwendungsprotokoll-Dateneinheit- (APDU) Betriebsbefehls, der durch ein Endgerät gesendet wird,
**gekennzeichnet durch**:
entsprechendes Verarbeiten (103) bei der Feststellung (102), dass der APDU-Betriebsbefehl ein Verarbeitungsbefehl für den Smart-Chip ist, und Zurückschicken (103) eines ersten Verarbeitungsergebnisses an das Endgerät über die erste Kommunikationsschnittstelle (100); andernfalls Senden (104) über eine zweite Kommunikationsschnittstelle (200) des APDU-Betriebsbefehls an eine mit der zweiten Kommunikationsschnittstelle (200) verbundenen Smartcard, und Zurückschicken (106) über die erste Kommunikationsschnittstelle (100) eines zweiten Verarbeitungsergebnisses, das über die zweite Kommunikationsschnittstelle (200) durch die Smartcard zurückgeschickt wird, an das Endgerät,
wobei vor dem Empfangen durch den Smart-Chip, über die erste Kommunikationsschnittstelle, des durch das Endgerät gesendeten APDU-Betriebsbefehls, das Verfahren ferner aufweist:
Initialisieren (201) durch den Smart-Chip, der eingeschaltet worden ist, der Chiphardware, der ersten Kommunikationsschnittstelle (100) und der zweiten Kommunikationsschnittstelle (200);
Entscheiden (202) durch den Smart-Chip, ob er mit der Smartcard verbunden ist;
falls ja, Erhalten (203) über jede zweite Kommunikationsschnittstelle (200) von Rücksetzinformationen der mit der zweiten Kommunikationsschnittstelle (200) verbundenen Smartcard, und Senden (203) über die erste Kommunikationsschnittstelle (100) aller empfangenen Rücksetzinformationen an das Endgerät; andernfalls Senden (204) über die erste Kommunikationsschnittstelle (100) der Rücksetzinformationen des Smart-Chips an das Endgerät.

7. Verfahren nach Anspruch 6, wobei das Entscheiden (202) durch den Smart-Chip, ob er mit einer Smartcard verbunden ist, aufweist:
Lesen durch den Smart-Chip von Einstellungsinformationen in einer Speichereinheit und Feststellen, dass der Smart-Chip mit der Smartcard verbunden ist, wenn die Einstellungsinformationen eine Markierung enthalten, die anzeigt, dass es eine Verbindung mit der Smartcard gibt; oder
Senden durch den Smart-Chip eines Rücksetzsignals an jede zweite Kommunikationsschnittstelle (200), und Feststellen, dass der Smart-Chip mit der Smartcard verbunden ist, wenn die Rücksetzinformationen der Smartcard innerhalb einer voreingestellten Zeit empfangen werden.

8. Verfahren nach Anspruch 6, wobei vor dem Senden (104) über die zweite Kommunikationsschnittstelle (200) des APDU-Betriebsbefehls an die entsprechende Smartcard, das Verfahren ferner aufweist:
Empfangen über die erste Kommunikationsschnittstelle (100) von durch das Endgerät gesendeten Daten;
Senden über die zweite Kommunikationsschnittstelle (200) des APDU-Betriebsbefehls an die entsprechende Smartcard, das aufweist:
Senden über die zweite Kommunikationsschnittstelle (200) des APDU-Betriebsbefehls und der Daten an die entsprechende Smartcard.

9. Verfahren nach einem der Ansprüche 6 bis 8, wobei in dem Fall, dass der Smart-Chip eine Raten-PPS unterstützt, das Verfahren vor dem Empfangen (101) durch den Smart-Chip über die erste Kommunikationsschnittstelle (100) des durch das Endgerät gesendeten APDU-Betriebsbefehls ferner aufweist:
Durchführen (302) einer Raten-PPS mit dem Endgerät durch den Smart-Chip; und
Durchführen (304) einer Raten-PPS mit jeder Smartcard durch den Smart-Chip, wenn der Smart-Chip mit der (den) Smartcard(s) verbunden ist.

## Revendications

1. Puce intelligente pour la communication de données, comprenant :
une unité de traitement (300) ; et
une première interface de communication (100) reliée à l'unité de traitement (300), prévue pour recevoir une commande de fonctionnement d'unité de données de protocole d'application (APDU) transmise par un terminal et transférer la commande de fonctionnement d'APDU à l'unité de traitement (300), et recevoir un premier résultat de traitement ou un deuxième résultat de traitement transmis par l'unité de traitement (300) et retourner le premier résultat de traitement ou le deuxième résultat de traitement au terminal,
**caractérisée en ce que** :
ladite puce intelligente comprend en outre au moins une deuxième interface de communication (200) reliée à l'unité de traitement (300), prévue pour recevoir la commande de fonctionnement d'APDU transmise par l'unité de traitement (300) et transférer la commande de fonctionnement d'APDU à une carte à puce reliée à la deuxième interface de communication (200), et recevoir le deuxième résultat de traitement retourné par la carte à puce et transférer le deuxième résultat de traitement à l'unité de traitement (300) ;
l'unité de traitement (300) est prévue pour un traitement en conséquence, par détermination si la commande de fonctionnement d'APDU est une commande de traitement pour la puce intelligente, et transmettre ensuite le premier résultat de traitement à la première interface de communication (100), et transmettre sinon la commande de fonctionnement d'APDU à la deuxième interface de communication (200), recevoir le deuxième résultat de traitement transféré par la deuxième interface de communication (200), et transmettre le deuxième résultat de traitement à la première interface de communication (100) ; et
l'unité de traitement (300) est en outre prévue pour initialiser, après mise sous tension, le matériel de la puce, la première interface de communication (100) et la deuxième interface de communication (200), recevoir des informations d'initialisation de la carte à puce reliée à chaque deuxième interface de communication (200) retournées par la deuxième interface de communication (200), par détermination si la puce intelligente est reliée à la carte à puce, et transmettre toutes les informations d'initialisation reçues à la première interface de communication (100), et transmettre sinon les informations d'initialisation de puce intelligente à la première interface de communication (100).

2. Puce intelligente selon la revendication 1, où
la deuxième interface de communication (200) est en outre prévue pour obtenir les informations d'initialisation de la carte à puce reliée à la deuxième interface de communication (200), et retourner les informations d'initialisation à l'unité de traitement (300) ; et
la première interface de communication (100) est en outre prévue pour transmettre les informations d'initialisation reçues de toutes les cartes à puce au terminal, ou transmettre les informations d'initialisation de puce intelligente reçues au terminal.

3. Puce intelligente selon la revendication 2, où,
l'unité de traitement (300) est en outre prévue pour extraire des informations de réglage d'une unité de stockage, et déterminer que la puce intelligente est reliée à la carte à puce si les informations de réglage contiennent un repère indiquant qu'une connexion à la carte à puce est présentée ; ou transmettre un signal d'initialisation à chaque deuxième interface de communication (200), et déterminer que la puce intelligente est reliée à la carte à puce si les informations d'initialisation de la carte à puce retournées par la deuxième interface de communication (200) sont reçues pendant une période définie ; et
la deuxième interface de communication (200) est en outre prévue pour transférer le signal d'initialisation transmis par l'unité de traitement (300) à la carte à puce reliée à la deuxième interface de communication (200), et recevoir des informations d'initialisation retournées par la carte à puce.

4. Puce intelligente selon la revendication 1, où
la première interface de communication (100) est en outre prévue pour recevoir des données transmises par le terminal et transférer les données à l'unité de traitement (300) ; l'unité de traitement (300) est en outre prévue pour transmettre la commande de fonctionnement d'APDU et les données à la deuxième interface de communication (200) ; et la deuxième interface de communication (200) est en outre prévue pour transmettre la commande de fonctionnement d'APDU et les données à la carte à puce reliée à la deuxième interface de communication (200).

5. Puce intelligente selon l'une des revendications 1 à 4, où l'unité de traitement (300) est en outre prévue pour, si la puce intelligente assiste une SPP en fonction du débit, exécuter une sélection de paramètres de protocole (SPP) en fonction du débit avec le terminal, et exécuter une SPP en fonction du débit avec chaque carte à puce si la puce intelligente est reliée à la, ou aux cartes à puce.

6. Procédé de communication de données par puce intelligente, comprenant :
la réception (101) par une puce intelligente, via une première interface de communication (100), d'une commande de fonctionnement d'unité de données de protocole d'application (APDU) transmise par un terminal,
**caractérisé par** :
le traitement (103) en conséquence, par détermination (102) si la commande de fonctionnement d'APDU est une commande de traitement pour la puce intelligente, et le retour (103) d'un premier résultat de traitement au terminal via la première interface de communication (100) ; sinon, la transmission (104) via une deuxième interface de communication (200) de la commande de fonctionnement d'APDU à une carte à puce reliée à la deuxième interface de communication (200), et le retour (106) via la première interface de communication (100) d'un deuxième résultat de traitement retourné via la deuxième interface de communication (200) par la carte à puce au terminal, où, préalablement à la réception par la puce intelligente via la première interface de communication de la commande de fonctionnement d'APDU transmise par le terminal, ledit procédé comprend en outre :
l'initialisation (201) par la puce intelligente mise sous tension du matériel de la puce, de la première interface de communication (100) et de la deuxième interface de communication (200) ;
l'évaluation (202) par la puce intelligente si celle-ci est reliée à la carte à puce ;
si oui, l'obtention(203) via chaque deuxième interface de communication (200) d'informations d'initialisation de la carte à puce reliée à la deuxième interface de communication (200), et la transmission (203) via la première interface de communication (100) de toutes les informations d'initialisation reçues au terminal ; sinon, la transmission (204) via la première interface de communication (100) des informations d'initialisation de puce intelligente au terminal.

7. Procédé selon la revendication 6, où l'évaluation (202) par la puce intelligente si celle-ci est reliée à une carte à puce comprend :
l'extraction par la puce intelligente d'informations de réglage d'une unité de stockage, et la détermination que la puce intelligente est reliée à la carte à puce si les informations de réglage contiennent un repère indiquant qu'une connexion à la carte à puce est présentée ; ou
la transmission par la puce intelligente d'un signal d'initialisation à chaque deuxième interface de communication (200), et la détermination que la puce intelligente est reliée à la carte à puce si les informations d'initialisation de la carte à puce sont reçues pendant un période définie.

8. Procédé selon la revendication 6, où, préalablement à la transmission (104) via la deuxième interface de communication (200) de la commande de fonctionnement d'APDU à la carte à puce correspondante, ledit procédé comprend en outre :
la réception via la première interface de communication (100) de données transmises par le terminal ;
la transmission via la deuxième interface de communication (200) de la commande de fonctionnement d'APDU à la carte à puce correspondante comprenant :
la transmission via la deuxième interface de communication (200) de la commande de fonctionnement d'APDU et des données à la carte à puce correspondante.

9. Procédé selon l'une des revendications 6 à 8, où, dans le cas où la puce intelligente supports assiste une SPP, préalablement à la réception (101) par la puce intelligente via la première interface de communication (100) de la commande de fonctionnement d'APDU transmise par le terminal, ledit procédé comprend en outre :
l'exécution (302) d'une SPP avec le terminal par la puce intelligente ; et
l'exécution (304) d'une SPP avec chaque carte à puce par la puce intelligente si la puce intelligente est reliée à la, ou aux cartes à puce.
